# EUROPÄISCHE PATENTSCHRIFT

(11) **EP 1 113 953 B1**
(45) Veröffentlichungstag und Bekanntmachung des Hinweises auf die Patenterteilung: **26.11.2003**
(21) Anmeldenummer: 99955722.6
(22) Anmeldetag: 16.09.1999
(51) Int. Cl.: B60R 25/00

(54) **VORRICHTUNG ZUR AUSWAHL VON BETRIEBSARTEN**
DEVICE FOR SELECTING OPERATING MODES
DISPOSITIF PERMETTANT DE SELECTIONNER DES MODES DE FONCTIONNEMENT

(30) Priorität: 17.09.1998 DE 19842545
(43) Veröffentlichungstag der Anmeldung: 11.07.2001
(73) Patentinhaber: ROBERT BOSCH GMBH, 70442 Stuttgart (DE)
(72) Erfinder: PETTIT, Roderick, Wantirna South 3152 (AU)
(86) Internationale Anmeldenummer: DE9902943
(87) Internationale Veröffentlichungsnummer: WO00017019

(56) Entgegenhaltungen:
- EP-A- 0 761 514
- CA-A- 2 156 236
- DE-A- 4 123 666

## Beschreibung

### Stand der Technik

Die Erfindung geht aus von einer Vorrichtung zur Auswahl von Betriebsarten nach der Gattung des unabhängigen Anspruchs. Eine derartige Vorrichtung ist bekannt aus der EP 0 761 514 A1. Aus der DE 43 32 411 A1 ist ein Diebstahlschutz für Kraftfahrzeuge mit mehreren Steuergeräten für Fahrzeugkomponenten bekannt. Unterschiedliche Steuergeräte können bei Übereinstimmen einer eingegebenen Prüfinformation mit einer vorgegebenen Referenzinformation freigeschaltet werden. Für zumindest zwei Steuergeräte unterscheiden sich die Prüf- und die Referenzinformationen voneinander. Als Prüf- bzw. Referenzinformation ist der Fingerabdruck eines berechtigten Benutzers vorgesehen. Ein Steuergerät wird dann freigegeben, wenn dessen Prüf- und Referenzinformation übereinstimmen und ein weiteres Quittungssignal zumindest eines weiteren Steuergeräts in gültiger Weise vorliegt. Dadurch läßt sich die Manipulationssicherheit erhöhen. Diese Steuergeräte werden jedoch nur bei der entsprechenden Bedingung freigeschaltet. Weitere unterschiedliche Betriebsarten sind nicht vorgesehen.

### Vorteile der Erfindung

Die erfindungsgemäße Vorrichtung zur Auswahl von Betriebsarten weist eine Biometriedatenerfassung auf, die Biometriedaten eines Benutzers als Identifikationssignal erfaßt. In einem Biometrieprofilspeicher ist zumindest ein Referenzmuster hinterlegt. Die erfindungsgemäße Vorrichtung zeichnet sich dadurch aus, daß eine Betriebsartenauswahl vorgesehen ist, die in Abhängigkeit von einer Übereinstimmung von Biometriesignal und Referenzmuster eine von zumindest zwei vorgesehenen Betriebsarten aktiviert. Die ohnehin in Verbindung mit einer Berechtigungsabfrage zum Betrieb eines Kraftfahrzeugs vorhandene Biometriedatenerfassung wird für weitere Funktionen wie die Auswahl weiterer Betriebsarten genutzt. Auf weitere hierfür vorgesehene Bedienelemente kann deshalb verzichtet werden. Außerdem ist durch den Vergleich des Biometriesignals mit dem Referenzmuster sichergestellt, daß Betriebsarten mit hohen Sicherheitsanforderungen auch tatsächlich nur von einem sich über die Biometriedaten ausweisenden Benutzer aktiviert werden können. Es läßt sich eine eindeutige Berechtigungszuordnung für das Ausführen bestimmter Betriebsarten zu den berechtigten Personen vornehmen. Beispielsweise darf nur der Fahrzeugeigentümer eine Anlernprozedur für weitere Nutzer starten, wenn die Biometriedaten des Fahrzeugeigentümers vorliegen. Somit erhöht die erfindungsgemäße Vorrichtung die Sicherheit vor Manipulationsversuchen unberechtigter Personen.

In einer zweckmäßigen Ausbildung sind in einer Betriebsart Benutzerabfragen vorgesehen, die in Abhängigkeit von der Übereinstimmung von Biometriesignal und Referenzmuster beantwortet werden. Die ohnehin vorhandene Biometriedatenfassung dient als Benutzereingabemöglichkeit für entsprechende menügeführte Abfragen. Eine erste Eingabesequenz könnte in diesem Zusammenhang für die Eingabe der Antwort "Ja", eine zweite Eingabesequenz des Biometriesignals für "Nein" vorbelegt sein. Dank der Vergleichsoperation zwischen Biometriesignal und Referenzmuster lassen sich die Benutzereingaben zugleich auf Zulässigkeit überprüfen.

In einer zweckmäßigen Weiterbildung hängt eine Aktivierung einer der zumindest zwei vorgesehenen Betriebsarten und/oder eine Beantwortung der Benutzerabfrage davon ab, mit welchem Referenzmuster das Biometriesignal übereinstimmt. Wird als Biometriesignal der Fingerabdruck verwendet, lassen sich den verschiedenen Fingern zugehörigen Referenzmustern auch unterschiedliche Betriebsarten zuordnen. Wird zum Beispiel der erste Finger auf die Biometriedatenerfassung gelegt, signalisiert dies der Vorrichtung den Wunsch des Benutzers, die erste Betriebsart zu aktivieren, der zweite Finger signalisiert die Aktivierung der zweiten Betriebsart und sofort.

Die Aktivierung einer der zumindest zwei vorgesehenen Beriebsarten und/oder eine Benutzerabfrage (Auswahlentscheidung) hängen davon ab, in welcher Reihenfolge der Beantwortung das Biometriesignal mit den Referenzmustern übereinstimmt. Durch die Einbeziehung einer bestimmten Reihenfolge des Fingerauflegens wird ein größerer Freiheitsgrad hinsichtlich der Anzahl der auszuwählenden Betriebsarten bzw. Benutzereingaben ermöglicht.

### Zeichnung

Ein Ausführungsbeispiel der Erfindung ist in der Zeichnung dargestellt und wird im folgenden näher beschrieben.

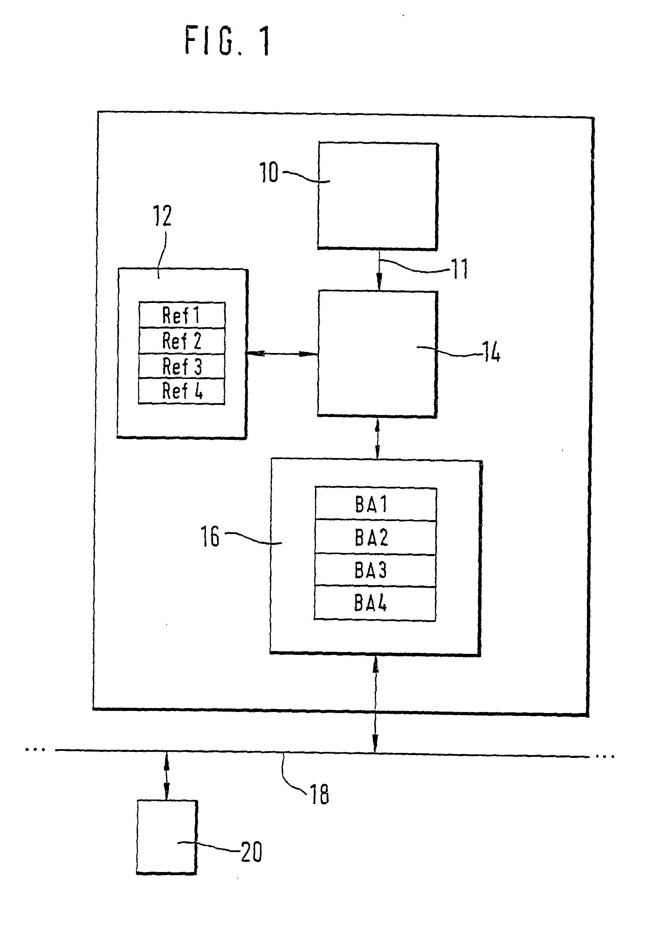

Es zeigen die Figur 1 ein Blockschaltbild, sowie die Figuren 2 und 3 jeweils ein Flußdiagramm der erfindungsgemäßen Vorrichtung.

### Beschreibung

Eine Biometriedatenerfassung 10 gibt ein Biometriesignal 11 an eine Betriebsartenauswahl 14 ab. In einem Biometrieprofilspeicher 12 sind ein erstes Referenzmuster Ref1, ein zweites Referenzmuster Ref2, ein drittes Referenzmuster Ref3 und ein viertes Referenzmuster Ref4 hinterlegt. Die Betriebsartenauswahl 14 tauscht Daten aus mit dem Biometrieprofilspeicher 12 und einem Betriebsartenrechner 16, in dem eine erste Betriebsart BA1, eine zweite Betriebsart BA2, eine dritte Betriebsart BA3 und eine vierte Betriebsart BA4 hinterlegt sind. Der Betriebsartenrechner 16 tauscht über ein Bussystem 18 Daten mit einem Steuergerät 20 aus.

Als von der Biometriedatenerfassung 10 erfaßte Biometriedaten werden benutzterspezifische Merkmale angesehen. Solche biometrischen Merkmale, eines Fingerabdrucks weisen einen rechtmäßigen Benutzer eindeutig aus und sind als Referenzmuster Ref1 bis Ref4 in digitalisierter Form in dem Biometrieprofilspeicher 12 hinterlegt. In diesem Zusammenhang kommt als Biometriedatenerfassung 10 beispielsweise ein Scanner in Betracht.

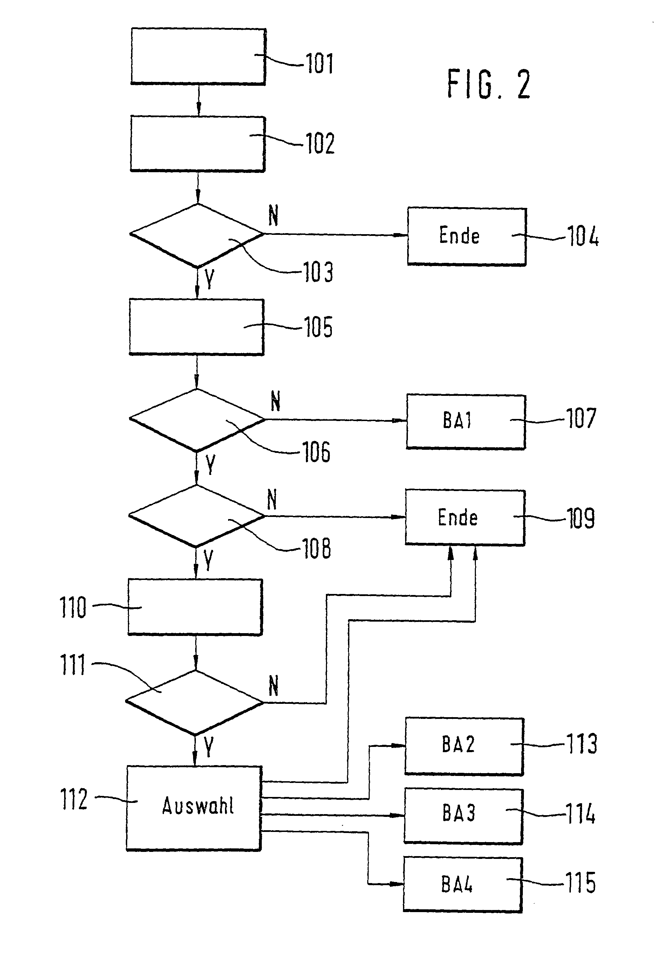

Bei einem ersten Ausführungsbeispiel sind als Referenzmuster Ref1 bis Ref4 vier Fingerabdrücke unterschiedlicher Finger des berechtigten Benutzers hinterlegt. Die Betriebsartenauswahl wird gemäß Figur 2 gestartet, indem beispielsweise ein Taster durch den Benutzer zu betätigen ist oder mit dem Betreten des Fahrzeugs die Biometriedatenerfassung 10 aktiviert wird, Schritt 101. Der Benutzer ist anschließend aufgefordert, einen Finger auf die Biometriedatenerfassung 10 zu legen, um so ein erstes Biometriesignal 11 zu erzeugen. Für eine gewisse Zeitspanne wird der Einlesevorgang des ersten Biometriesignals 11 aktiviert, Schritt 102. In der folgenden Abfrage (Schritt 103) wird überprüft, ob das erste Biometriesignal 11 mit einem der vier Referenzmuster Ref1 bis Ref4 übereinstimmt. Ist dies nicht der Fall, wird auf einen nicht autorisierten Benutzer geschlossen und der Vorgang der Betriebsartenauswahl abgebrochen, Schritt 104. Andernfalls wird das mit dem ersten Biometriesignal 11 korrespondierende Referenzmuster Ref1 zwischengespeichert. Will der Benutzer eine der Betriebsarten BA2 bis BA4 aktivieren, so ist er gehalten, einen weiteren Finger auf die Biometriedatenerfassung 10 zu legen, damit diese das zweite Biometriesignal 11 einlesen kann, Schritt 105. Zugleich wird ein Zeitfenster gestartet, das in der folgenden Abfrage 106 ausgewertet wird. Berührt der Benutzer innerhalb einer vorgegebenen Zeitspanne die Biometriedatenerfassung 10 nicht, es liegt also kein zweites Biometriesignal 11 innerhalb diese Zeitspanne vor, aktiviert die Betriebsartenauswahl 14 die erste Betriebsart BA1, Schritt 107.

Die erste Betriebsart BA1 stellt den Normalbetrieb dar. Sie gibt dem Benutzer, der sich bereits in der Abfrage 103 als berechtigt ausgewiesen hat, das Fahrzeug im vollen Umfang frei, Schritt 107. Hierzu könnte beispielsweise eine Freigabeinformation an ein betriebsnotwendiges Steuergerät 20 gelangen. Andernfalls wird in der Abfrage 108 auch das zweite Biometriesignal durch Vergleich mit den Referenzmustern Ref1 bis Ref4 auf seine Gültigkeit hin überprüft. Bei einer Abweichung des zweiten Biometriesignals 11 von allen Referenzmuster Ref1 bis Ref4 wird die Betriebsartenauswahl vorzeitig abgebrochen, Schritt 109. Bei einem als gültig erkannten zweiten Biometriesignal 11 wird auch dieses zweite Biometriesignal 11 zwischengespeichert und auf einen dritten Einlesevorgang gewartet. Der Benutzer ist nun zum dritten Mal aufgefordert, durch Auflegen des entsprechenden Fingers eine Betriebsartenauswahl vorzunehmen. Damit wird auch das dritte Biometriesignal 11 eingelesen, Schritt 110. In Übereinstimmung mit Abfrage 108 wird auch das dritte Biometriesignal 11 mit den Referenzmustern Ref1 bis Ref4 auf Übereinstimmung verglichen. Fehlt diese, wird die Betriebsartenauswahl vorzeitig abgebrochen, Schritt 109. Ansonsten schließt sich der Auswahlvorgang an, Schritt 112. Je nach erfaßtem ersten, zweiten und dritten Biometriesignal 11 bzw. deren Reihenfolge, wird eine der noch verbleibenden Betriebsarten BA2 bis BA4 aktiviert.

Der Benutzer gelangt beispielsweise in die zweite Betriebsart BA2, wenn er nacheinander den ersten Finger (korrespondierend mit dem ersten Referenzmuster Ref1), den zweiten Finger (korrespondierend mit dem zweiten Referenzmuster Ref2) und den dritten Finger (Korrespondierend mit dem dritten Referenzmuster Ref3) auflegt. In diesem Fall stimmt das erste Biometriesignal 11 mit dem ersten Referenzmuster Ref1, das zweite Biometriesignal 11 mit dem zweiten Referenzmuster Ref2, sowie das dritte Biometriesignal 11 mit dem dritten Referenzmuster Ref3 überein. In dieser Konstellation wird die zweite Betriebsart BA2 ausgewählt.

Die dritte Betriebsart BA3 wird beispielhaft dann aktiviert, wenn zuerst der zweite Finger, anschließend der vierte Finger und dann der erste Finger der Biometriedatenerfassung 10 zugeführt wurde. In diesem Fall stimmen erstes Biometriesignal 11 mit dem zweiten Referenzmuster Ref2, zweites Biometriesignal 11 mit dem vierten Referenzmuster Ref4, sowie drittes Biometriesignal 11 mit dem ersten Referenzmuster Ref1 überein. Sind die entsprechenden Bedingungen erfüllt, aktiviert die Betriebsartenauswahl 14 die dritte Betriebsart BA3.

In ähnlicher Weise erfolgt die Zuordnung der vierten Betriebsart BA4, es muß lediglich die Eindeutigkeit der Fingersequenz zu der zugeordneten Betriebsart vorliegen, Es können auch mehrere Fingersequenzen-"oder-verknüpft"- für die Auswahl einer einzigen Betriebsart zugelassen sein. Dies ist insbesondere dann sinnvoll, wenn weiteren Nutzern die Aktivierung der Betriebsarten BA1 bis BA4 ermöglicht werden soll. Sollte keine zulässige Fingersequenz für die Aktivierung einer Betriebsart BA2 bis BA4 vorliegen, wird der Vorgang wiederum abgebrochen, Schritt 109.

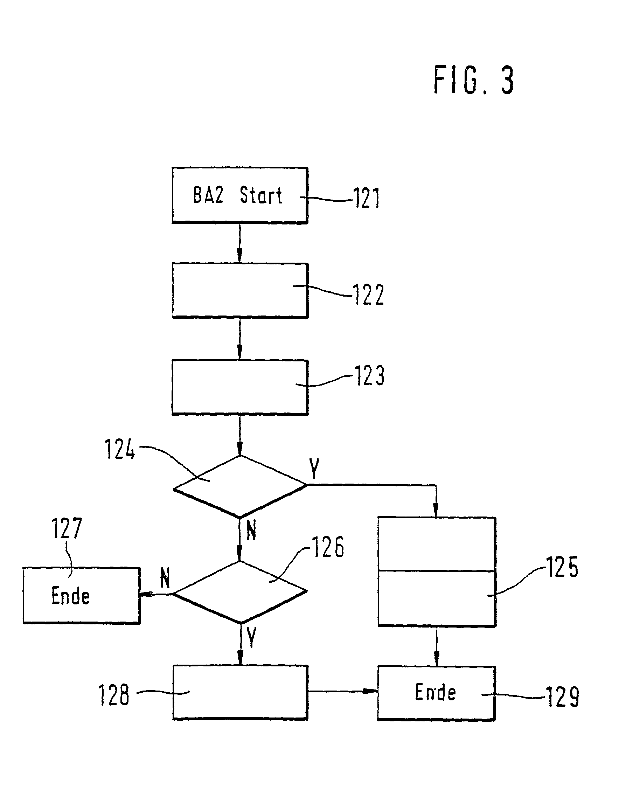

In Figur 3 ist anhand der zweiten Betriebsart BA2 der Eingabeablauf exemplarisch dargestellt, wie der Benutzer menügeführt eine Auswahlentscheidung unter Verwendung der Biometriedatenerfassung 10 vornehmen kann. Gelangte der Benutzer gemäß Figur 2 in den Schritt 113, wird ein entsprechendes, die zweite Betriebsart BA2 realisierendes Unterprogramm aufgerufen und gestartet, Schritt 121. Der Benutzer kann zum Beispiel in der zweiten Betriebsart BA2 weitere Nutzer als normale Nutzer oder als Nutzer mit den gleichen Rechten wie er selbst anlernen. Während eines Schrittes 122 wird eine im Kraftfahrzeug ohnehin vorhandene Anzeige in der Weise aktiviert, daß sie den Schriftzug "Anlernen als Masteruser gewünscht?" einblendet. Hierzu können weitere hier nicht näher beschriebene Berechtigungsnachweise erforderlich sein. Der Benutzer wird zudem darauf aufmerksam gemacht, daß ein Auflegen des ersten Fingers auf die Biometriedatenerfassung 10 "ja", des zweiten Fingers "nein" signalisiert. Der Benutzer ist somit zu einer entsprechenden Auswahl aufgefordert, Schritt 123.

In der folgenden Abfrage 124 wird das von der Biometriedatenerfassung 10 gelieferte Biometriesignal 11 mit dem ersten Referenzmuster Ref1 verglichen (korrespondierend mit dem ersten Finger), um zu erkennen, ob der Benutzer die in Schritt 123 gestellte Frage mit einem "ja" beantwortet hat. Stimmt das Biometriesignal 11 mit dem ersten Referenzmuster Ref1 überein, schließt sich ein Schritt 125 an. In diesem Schritt 125 wird der als Masteruser einzulernende Benutzer aufgefordert, nacheinander beispielsweise vier Finger auf die Biometriedatenerfassung 10 zu legen. Das sich ergebende Biometriesignal 11 wird für jeden Finger als weiteres Referenzmuster Ref5 bis Ref8 in dem Biometrieprofilspeicher 12 abgespeichert. Um diesem Masteruser einen uneingeschränkten Zugriff auch auf die drei weiteren Betriebsarten BA2 bis BA4 zu ermöglichen, werden die in Schritt 112 gestellten Bedingungen zur Aktivierung der jeweiligen Betriebsart BA2 bis BA4 in der Weise "oder--verknüpft", daß die zweite Betriebsart BA2 auch dann aktiviert wird, wenn als erstes Biometriesignal 11 das fünfte Referenzmuster Ref5, als zweites Biometriesignal 11 das sechste Referenzmuster Ref6 und als drittes Biometriesignal das siebte Referenzmuster Ref7 in dieser Reihenfolge vorliegen. Diese Anpassung kann auch für die Aktivierung für weitere Betriebsarten BA3 und BA4 in entsprechender Weise vorgenommen werden.

Wünscht der Benutzer nicht das Einlernen des neuen Nutzers als Masteruser - das Biometriesignal 11 stimmt also nicht mit dem ersten Referenzmuster Ref1 überein - kann sich eine weitere Abfrage 126 anschließen.
In dieser wird das Biometriesignal 11 mit dem zweiten Referenzmuster Ref2, das für die Antwort "Nein" steht, verglichen. Bei fehlender Übereinstimmung wird der Anlernvorgang vorzeitig abgebrochen, Schritt 127. Andernfalls kann sich Schritt 128 anschließen, in dem der als Normaluser anzulernende Benutzer aufgefordert wird, seinen Fingerabdruck durch die Biometriedatenerfassung 10 abtasten zu lassen und in dem Biometrieprofilspeicher 12 zu hinterlegen. Im Gegensatz zum Schritt 125 unterbleibt die zusätzliche oder-Verknüpfung zur Auswahl der weiteren Betriebsarten BA2 bis BA4. Der Anlernvorgang ist damit abgeschlossen, Schritt 129. Der Normaluser ist lediglich berechtigt, in die erste Betriebsart BA1 zu wechseln, die den Normalbetrieb des Fahrzeugs gewährleistet. Abfrage 103 ist so zu modifizieren, daß auf Zulässigkeit dann erkannt wird, wenn das Biometriesignal 11 mit einem der Referenzmuster Ref1 bis Ref7 übereinstimmt.

Die dritte Betriebsart BA3 kann als sogenannter Werkstatt - Modus ausgeführt werden, in dem bereits bekannte Fingerabdrücke des Werkstattpersonals für eine bestimmt Zeit gültig sind. Alternativ ist zur Benutzung des Fahrzeugs während des Werkstattbesuchs keine Identifikation über die Biometriedatenerfassung 10 notwendig, um das Fahrzeug zu benutzen. Das Steuergerät 20 ist in dieser Betriebsart unabhängig von der Übereinstimmung des Biometriesignals 11 mit einem der Referenzmuster Ref1 bis Ref4 freigeschaltet.

Bei der vierten Betriebsart BA4 handelt es sich um einen Hotelbetrieb, in dem ein Fingerabdruck des Hotelbediensteten angelernt und anschließend nach Verlassen des Hotels wieder gelöscht wird. Mit dieser Berechtigung kann der Hotelbedienstete nur eingeschränkt die Ressourcen des Fahrzeug nutzen, beispielsweise nur den ersten Gang und den Rückwärtsgang. Das Steuergerät 20 stellt die Ressourcenbegrenzung sicher. Alternativ können noch weitere Betriebsarten vorgesehen werden, wie beispielsweise ein Service-Modus. Hierbei kann dem System mitgeteilt werden, bestimmte Fahrzeugeinrichtungen, wie beispielsweise den Kofferraum, den Motorenraum, das Mobiltelefon oder das Navigationssystem nur für bestimmte Personen zugänglich zu machen oder zu sperren. Diese Betriebsart eignet sich für Fahrzeugvermietungen, bei denen verschiedene Einrichtungen des Leihfahrzeugs je nach Wunsch des Entleihers freigegeben werden können.

## Patentansprüche

1. Vorrichtung zur Auswahl von Betriebsarten mit einer Biometriedatenerfassung (10), die die Biometriedaten mehrerer Fingerabdrucke verschiedener Finger eines Benutzers als Biometriesignal (11) erfasst, mit einem Biometrieprofilspeicher (12), in dem zumindest ein Referenzmuster (Ref1 bis Ref4) hinterlegt ist und mit einer Betriebsartenauswahl (14), die in Abhängigkeit von einer Übereinstimmung von Biometriesignal (11) und Referenzmuster (Ref1 bis Ref4) eine von zumindest zwei vorgesehenen Betriebsarten (BA1 bis BA4) aktiviert, **dadurch gekennzeichnet, dass** eine Aktivierung durch Auflegen unterschiedlicher Finger erfolgt und das eine Auswahl einer der zumindest zwei vorgesehenen Betriebsarten (BA1 bis BA4) und/oder eine Beantwortung einer Auswahlentscheidung davon abhängt, in welcher Reihenfolge die Biometriesignale (11) verschiedener Finger mit dem Referenzmuster (Ref1 bis Ref4) übereinstimmt.

2. Vorrichtung nach Anspruch 1, **dadurch gekennzeichnet, dass** eine Aktivierung einer der zumindest zwei vorgesehenen Betriebsarten (BA2 bis BA4) und/oder eine Beantwortung einer Auswahlentscheidung mittels Biometriesignal (11) davon abhängt, mit welchem Referenzmuster (Ref1 bis Ref4) das Biometriesignal (11) der Benutzers übereinstimmt.

## Claims

1. Device for selecting operating modes having a biometry data acquisition means (10) which acquires the biometry data of a plurality of fingerprints of different fingers of a user as biometry signal (11), having a biometry profile memory (12) in which at least one reference pattern (Ref1 to Ref4) is stored, and having an operating mode selection means (14) which, as a function of a correspondence between a biometry signal (11) and a reference pattern (Ref1 to Ref4), activates one of at least two predefined operating modes (BA1 to BA4), **characterized in that** activation is carried out by applying different fingers and **in that** a selection of one of the at least two provided operating modes (BA1 to BA4) and/or a response to a selection decision depend on the sequence in which the biometry signals (11) of different fingers correspond to the reference pattern (Ref1 to Ref4).

2. Device according to Claim 1, **characterized in that** activation of one of the at least two provided operating modes (BA2 to BA4) and/or a response to a selection decision by means of a biometry signal (11) depend on the reference pattern (Ref1 to Ref4) to which the biometry signal (11) of the user corresponds.

## Revendications

1. Dispositif permettant de sélectionner des modes de fonctionnement avec un enregistrement (10) des données biométriques, de plusieurs empreintes digitales de différents doigts d'un utilisateur en tant que signal biométrique (11), avec une mémoire (12) de profils biométriques, dans laquelle au moins un modèle de référence (Réf1 à Réf4) est déposé, et avec une sélection (14) de modes de fonctionnement qui, en fonction d'une concordance du signal biométrique (11) et du modèle de référence (Réf1 à Réf4), active au moins un des deux modes de fonctionnement prédéterminés (BA1 à BA4),
**caractérisé en ce qu'**
une activation est effectuée par la pose de différents doigts et qu'une sélection d'au moins un des deux modes de fonctionnement prévus (BA1 à BA4) et/ou une réponse à une décision de sélection dépendent de la séquence dans laquelle les signaux biométriques de différents doigts concordent avec le modèle de référence (Réf1 à Réf4).

2. Dispositif selon la revendication 1,
**caractérisé en ce qu'**
une activation d'au moins un des deux modes de fonctionnement prévus (BA2 à BA4) et/ou une réponse à une décision de sélection au moyen d'un signal biométrique (11) dépendent du modèle de référence (Réf1 à Réf4) avec lequel concorde le signal biométrique (11) de l'utilisateur.
